# EUROPEAN PATENT APPLICATION

(11) **EP 2 738 973 A1**
(43) Date of publication of application: **04.06.2014**
(21) Application number: 12306490.9
(22) Date of filing: 30.11.2012
(51) Int. Cl.: H04L 9/00

(54) **System and method for cryptography using multiplicative masking using simultaneous exponentiation techniques**

(71) Applicant: Gemalto SA, 92190 Meudon (FR)
(72) Inventor: Salgado, Stéphanie, 92190 MEUDON (FR)

(57) **Abstract**

A system, method and computer-readable storage medium with instructions for operating a cryptography apparatus to mask the calculation of an exponent that could otherwise be vulnerable to side-channel attack with a calculation that may be intertwined with the exponent calculation such as to mask intermediate results while not effecting the ultimate result thereby hiding the original calculation from side-channel attack. Other systems and methods are disclosed.

## Description

### BACKGROUND OF THE INVENTION

The present invention relates generally to electronic cryptography technology, and in particular to protecting a security device against side-channel attacks by using multiplicative masking using simultaneous exponentiation techniques.

Electronic communication and commerce are powerful yet dangerous tools. With the wide-spread availability of network technology, such as the Internet, there is an ever increasing use of online tools for communication and commerce. Many users find it easier or quicker to conduct important transactions, whether in the form of correspondence or commerce, using computers and computer networks. However, there is always the risk that the securities of electronic transactions are compromised by being intercepted by third parties who do not have the right to partake in the transactions. When malicious third parties obtain access to otherwise private transactions and data there is risk of economic losses, loss to privacy, and even physical security may be jeopardized. Cryptography is one mechanism employed to avoid intrusion into the privacy of electronic transactions and data.

Cryptography is a technology for hiding a message in the presence of third parties using mathematical techniques in which a message is encrypted in such a way that it can only be decrypted using a secret key that should only be known by the recipient (and sometimes the sender) of a message.

Cryptographic algorithms have inputs and outputs. In the case of encryption, the input is a message that is to be protected in *plaintext.* The plaintext message is manipulated by the cryptographic algorithm to produce a *ciphertext,* the output. To produce the ciphertext the cryptographic algorithm performs certain mathematical operations that include the use of a secret key. The key may be a shared secret or may be a private key of the recipient.

One frequently used cryptographic technique is the RSA algorithm named for its inventors Rivest, Shamir, and Adelman. To obtain a highly secure ciphertext, the RSA algorithm relies on the difficulty of factoring large integers. A user creates a public key by randomly selecting two large similar-sized prime numbers and multiplies these two numbers together. The result is the *public key* of the user which the user may publish thereby enabling other entities to encrypt messages for the user. While the *public key* is public and anyone can encrypt a message using it, the encrypted message can only be decrypted using the corresponding *private key* which, in effect, consists of the two prime numbers that were used to generate the public key. It is therefore critical to the security provided by the RSA algorithm that the private keys are kept secret and cannot be discerned by a third party attempting to subvert the secrecy of RSA-encrypted messages.

While the details of the RSA algorithm are beyond this document, for discussion purposes herein the algorithm may be reduced to two complimentary calculations for encryption of a message *M* into a ciphertext *C* and the decryption of the ciphertext *C* back into the message *M**.*** The *public key* is computed from two large prime numbers *p* and *q.* From *p* and *q* a number *n = pq* is computed; *n* is the modulus for both *private* and *public keys.* Furthermore *e,* the *public key exponent* is computed from *p* and *q,* as follows:
Choose e such that: 1 < *e* < ϕ(*n*) and the greatest common divisor of (e, *ϕ(n)*) = 1, i.e., e and ϕ(*n*) are coprime, wherein, *n* = *pq* and ϕ*(n)* is Euler's Totient function.

Thus, the *public key* consists of the pair of integers (*n*, *e*). The corresponding private key consists of the pair of integers *(n, d)* where *d* ≡ *e⁻¹* (mod ϕ(*n*)) where ϕ(*n*) is Euler's Totient function.

A message *M* is encrypted using the public key (*n, e)* into ciphertext *C* by:
*C=M^{e}* mod *n*

The message *M* is recovered and decrypted from *C* using the corresponding private key *(n,d)* by:
*M* = *C^{d}* (mod *n*)

RSA may also be used to cryptographically sign a message *M* into a signed message *Mₛ*, i.e.,
*Mₛ = M^{d}* (mod *n*)

Usually these computations are not performed directly as the exponentiations on large integers are expensive computations. A more efficient computation, which involves exponentiation of much smaller integers, uses the Chinese Remainder Theorem. Without going into details, the Chinese Remainder Theorem approach includes the modular exponentiations:
*Sp* = *Mₚ^{dp}* mod *p*
*Sq* = *M_{q}^{dp}* mod *q*
Wherein *dp* = *d* mod (*p - 1*) and *dq* = *d* mod (*q - 1*), and
*Mₚ* = *M* mod *p* and *Mq* = *M* mod *q*

The exponentiations *Sp* = *M^{dp}* mod *p* and *Sq = M_{q}^{dp}* mod *q* are quite vulnerable to attacks known as *side-channel attacks,* for example, *differential power analysis attacks. Side-channel attacks* make use of the fact that a device performing a cryptographic calculation has inputs and outputs other than the input *plaintext* message and the output ciphertext message. These inputs and outputs include the power consumption of the device while performing certain calculations.

*A differential power analysis (DPA) attack* involves repeatedly varying the message text and performing a statistical analysis of the power consumption of the device, for example a smart card, on which the cryptography operations are executing. From this analysis, an attacker may derive the private keys. DPA operates on the principle that power consumption of a device during a particular period depends on the number of register bits that are being changed from 0 to 1 during that period, or vice versa. By tracing the power consumption using a high frequency oscilloscope and subsequent analysis of the trace for patterns, the attacker may deduce the value *dp* or *dq* and from there the private key used in the corresponding calculation.

Prior art techniques for defending against DPA rely on masking the message *M* with a random value *R*. However, as the goal is to compute *Sp* or *Sq,* it must be mathematically possible to recover the desired quantity by eliminating the mask. There are two classic methods for this masking/unmasking operation.

The first of these methods uses a multiplicative mask and removes the mask by computing the inverse of the mask:
1- *M*'=*M**R
2- Sp' = *M'*^{dp} mod p
3- Corr = (R⁻¹) mod p // Compute a correction factor
4- Sp = Sp' * Corr mod p // Back out Sp using the correction factor

There are efficiency concerns with this solution in that the computation of the correction factor is costly, on the same order as the computation of *Sp,* i.e., the computation is in effect an overall doubling of the exponentiation.

The second classic method uses an additive mask which is naturally removed by applying the modulo (mod) in the final calculation:
1- *M'*=*M*+(R*p)
2- Sp = (*M*'^{dp}) mod p

One drawback to this technique is that, due to the iterative aspect of the exponentiation the masking of *M* with R*p is removed at the first round as reduced mod p. Therefore, it is necessary to also mask the modulo in addition to the message:
1- *M*' = (*M* + R*p)
2- Sp' = (*M*'^{dp}) mod p . R2
3- Sp = Sp' mod p

A drawback of this solution is that it must handle data that has a length equal to the sum of the length of *p* and the length of R2 throughout the entire exponentiation instead of just data the length of *p* only. The bigger the size of R2, the more secure the masking operation. However, with R2 being of sufficient size to obtain such a security advantage, the penalty is significant; as high as 30% in computation time. An ancillary problem is that modulo operations with that size operators are not possible on smaller processors due to size restrictions in the hardware.

From the foregoing it will be apparent that there is still a need for an improved technology to provide a secure mechanism that is computationally efficient, that does not require excessively large registers or other storage, and in which a portable security device - e.g., a smart card connected to a host computer - has the capability of providing cryptographic services that are protected from differential power analysis and other side-channel attacks.

### BRIEF DESCRIPTION OF THE DRAWINGS

Figure 1 is a schematic illustration of a host computer with a portable security device, e.g., a smart card, connected thereto for performing cryptographic services through connection over a network to one or more servers.

Figure 2 is a schematic illustration of a portable security device.

Figure 3 is a schematic illustration of programs stored in a memory of the portable security device of Figure 2.

Figure 4 is a schematic illustrating a program listing of a Cryptography Module that may be stored in the memory of a portable security device as illustrated in Figure 4 and including one or more modular exponentiation operations.

Figure 5 illustrates a prior art method for performing a modular exponentiation according to the square-and-multiply-always algorithm.

Figure 6 illustrates crypto module implementing a modified square-and-multiply-always algorithm, modified according to a preferred embodiment to mask the calculation with another calculation intertwined with the square-and-multiply-always algorithm.

Figure 7 is an illustration of a crypto module with a program listing for a square-and-multiply-always algorithm equivalent to the program listing of Figure 6 modified in a manner to illustrate that implementation according to Figures 5 and 6 produce the same result.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a technology is provided that enables the use of smart cards, or other portable security devices, to be used to digitally sign documents or to decrypt encrypted documents or messages using private keys stored on the smart cards in a manner that efficiently reduces the risk of differential power analysis attacks.

Smart cards are plastic cards with an embedded microprocessor and a secure storage. They are portable, secure, and tamper-resistant. Smart cards provide security services in many domains including telecommunication, banking, and citizen identity. There are several form factors used for smart cards including credit card shaped cards with electrical connectors to connect the smart card to a smart card reader, USB tokens with embedded smart cards, and SIM cards for use in mobile telephones and tablet devices. Smart cards are used herein as examples of portable security devices that may be used in implementations of the technology described herein. Other examples of portable security devices include smart memory cards, flash memory, etc. In a preferred embodiment, the portable security device has a processor, a memory for storing programs and data, and some security features to make the device relatively tamper proof. Smart cards are examples of such devices.

While the mechanism for masking a cryptographic calculation described herein may be used advantageously in smart cards and other portable security tokens used for performing cryptographic calculations, the same mechanisms may be used with other cryptographic processors. Thus, smart cards are used herein for illustrative purposes only.

Digital signature and other cryptography are functions that smart cards, for example, provide. The smart card stores private or shared secret keys in its secure storage and performs cryptographic operations to generate digital signature for a given input or to decrypt a given input. A smart card works with a host device, such as a personal computer (PC), a cell phone, a tablet device or a banking terminal. Typically, a PC application, such as an email client or a web browser, works with a smart card to sign, encrypt, or decrypt a document. The cryptographic operation may be part of a challenge-response mechanism for user authentication. The PC application and the smart card interact through some cryptographic API called middleware, which knows how to communicate with the smart card. In this scenario, the smart card provides services locally to the PC.

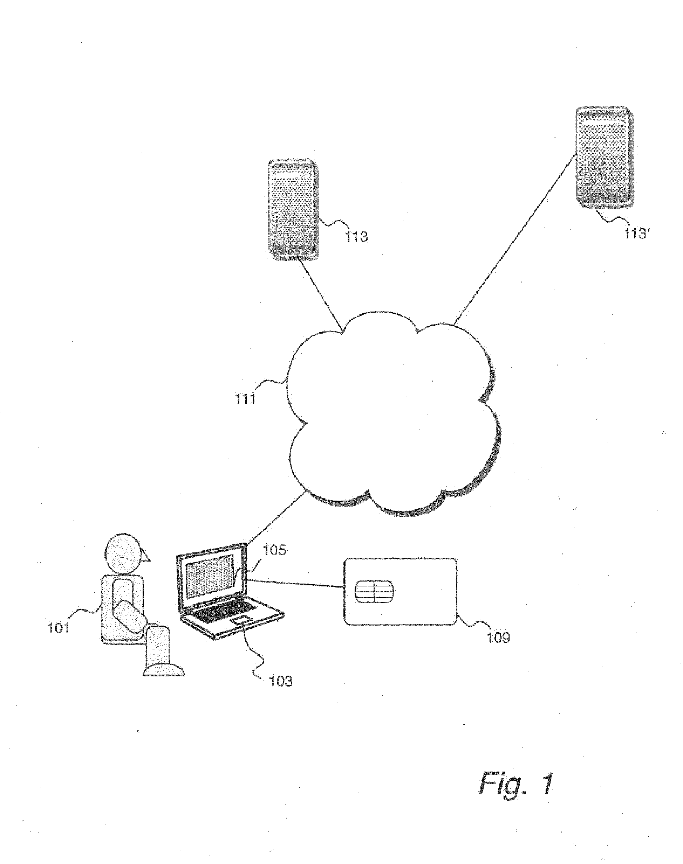

Figure 1 is a schematic illustration of a network 111 connecting a host computer 103 with a portable security device 109, e.g., a smart card, connected thereto, to one or more remote servers 113. The host computer 103 is operated by a user 101 who interacts with one of the servers 113 via a web browser window 105 of a web browser. In the example scenario illustrated in Figure 1, the smart card 109 provides the cryptographic operations on behalf of the user 101, e.g., to cryptographically sign documents, to decrypt messages received from the relying party 113, or to perform a cryptographic operation as part of a challenge-response authentication mechanism.

While Figure 1 provides an illustration of a scenario in which cryptography may play an important role, there are many other important uses for cryptography. Thus, the technology described herein is not limited in its application to the use-case illustrated in Figure 1.

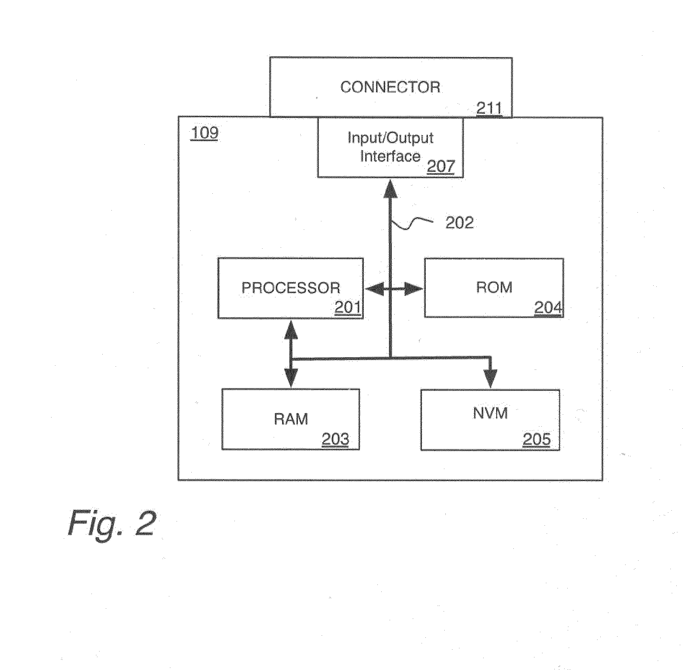

Figure 2 is a schematic illustration of a portable security device 109, for example, a smart card. The portable security device 109 may include a processor 201 connected via a bus 202 to a random access memory (RAM) 203, a read-only memory (ROM) 204, and a non-volatile memory (NVM) 205. The portable security device 109 further includes an input/output interface 207 for connecting the processor 201, again typically via the bus 202, to a connector 211 by which the portable security device 109 may be connected to the host computer 103.

In alternative embodiments, the connection between the host computer 103 and the portable security device 109 is wireless, for example, using near-field communication (NFC) or other radio or microwave communications technologies.

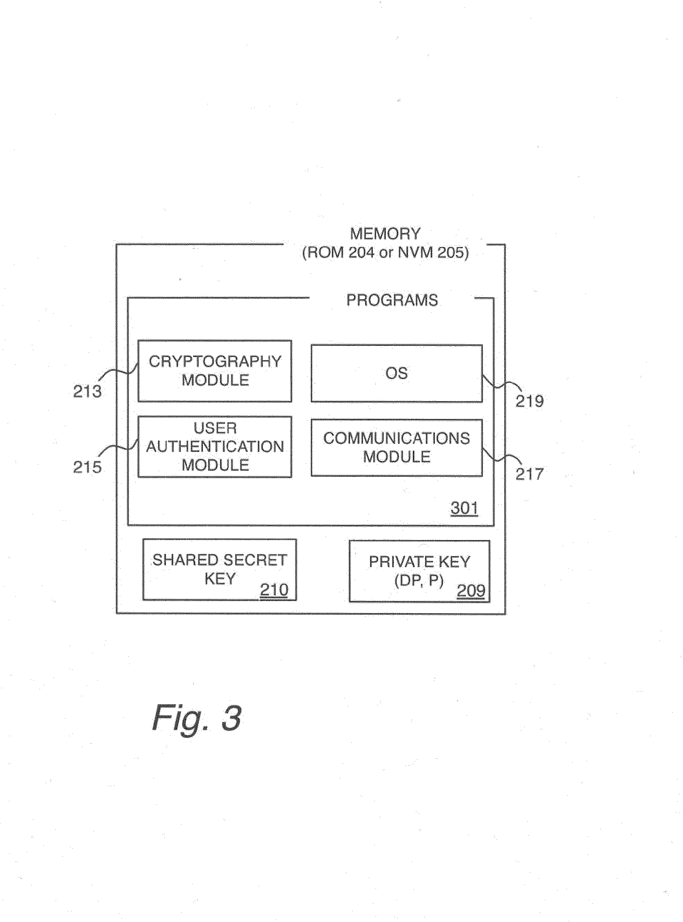

The NVM 205 and/or ROM 204 may include computer programs 301 as is illustrated in Figure 3. While it is here depicted that the computer programs 301 are all co-located in the ROM 202 or the NVM 205, in actual practice there is no such restriction as programs may be spread out over multiple memories and even temporarily installed in RAM 203. Furthermore, the portable security device 109 may include multiple ROMs or NVMs. The programs 301 include operating system programs as well as application programs loaded on to the portable security device 109. The NVM 205 or ROM 202 may also contain private data, such as a private key 209 or a shared secret key 210, stored either in its basic form or in derived quantities.

The portable security device 109 programs 301 may include a cryptography module 213, a user authentication module 215, a communications module 217, and the operating system OS 219.

Thus, the portable security device 109 may receive a document or message via the connector 211. The processor 201, by executing instructions of the cryptography module 213, may digitally sign the document/message or may decrypt the document/message using the private key 209 or shared secret key 210. Using functionality provided through the communications module 217, the processor 201 may receive and transmit communications with the host computer 103.

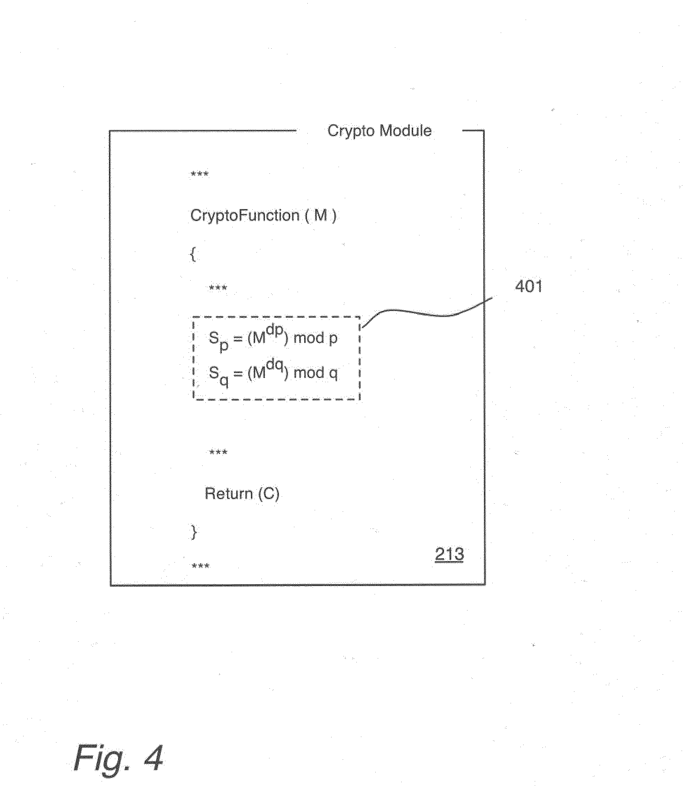

Figure 4 is a schematic of a possible implementation of the cryptography module 213. The cryptography module 213 would contain one or more functions, methods, or routines. One possible function could be, as is illustrated in Figure 4, a function called *CryptoFunction ( )* which takes the argument *M*, the message to sign or decrypt. Assuming that *CryptoFunction ()* implements a cryptographic operation using the Chinese Remainder Theorem, it would include modular exponentiation calculations 401 producing the results *Sp* and *Sq*. For the sake of the discussion that follows, we refer to the calculations of *Sp* a calculation of an exponent *dp* of a message *M* taken modulo *p*. For the corresponding calculation of *Sq* the exponent is *dq* and the modulo is *q*. However, the approach discussed below for securely calculating *Sp* is equally applicable to the calculation of *Sq.*

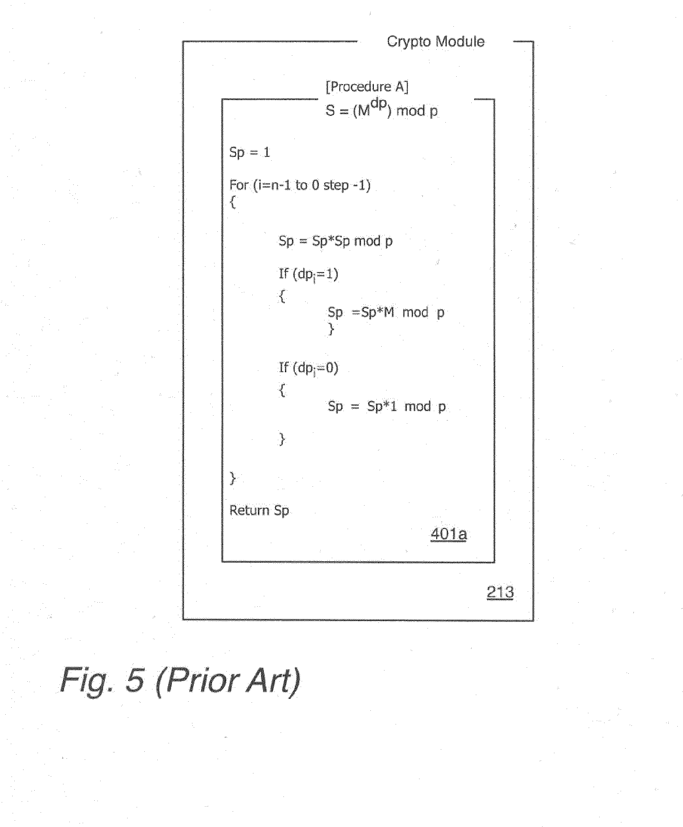

As a person skilled in the art would appreciate, this operation would be reduced to lower level arithmetic statements for the sake of efficiency. A common approach for efficiently calculating *M^{dp}* mod *p* is the *Square- and-Multiply-Always* algorithm. Figure 5 is a program listing illustrating of a traditional square-and-multiply-always procedure for calculating *Sp = M^{dp}* mod *p* wherein *dp* is written in the binary representation
*dₚ =* [*dpₙ₋₁, dpₙ₋₂, ..,dp₂,dp₁ ,dp₀*].

According to an embodiment of the invention, described herein below, the crypto module 213 uses a modification to the square-and-multiply-always procedure 401 a that relies on an aspect of *Fermat's Little Theorem* to mask the modular exponentiation calculation 401. This modified approach is illustrated in Figure 5.

Fermat's Little Theorem (called *Little* so to distinguish it from the more famous Fermat's *Last* Theorem and other mathematical theorems attributed to Pierre de Fermat) states that given a prime number *p* and an integer *a, a^{p} - a* is evenly divisible by *p*. This may be written in modular notation as:
(*a^{p} - a*) ≡ 0 mod *p*

Furthermore, if *a* is not divisible by *p*, then *a^{(p-1)} -* 1 is an integer multiple of *p*. This relationship may be written in modular notation as:
*a^{(p-1)}* ≡ 1 mod *p*

In a preferred embodiment, the exponentiation *a*^{(*p-1*)} mod *p* is used to mask the calculation of *Sp = M^{dp}* mod *p*.

If *Sp = X*, then *Sp = X*Y* if *Y* = 1. Thus, by using a calculation for *Y* that is given to produce the value 1, the calculation for *S* may be masked by introducing into the calculation the calculation of the value *Y*. In the technology described below, *Sp* is calculated by
*Sp = X*Y mod p*
where *X* is the desired exponentiation *M^{dp}* and *Y* is *R*^{(*p-1*)} wherein *R* is a random number and which, because by Fermat's Little Theorem *R*^{(*p-1*)} ≡ 1 mod *p*, is equivalent to *Sp = M^{dp}* mod *p*.

As noted in the discussion of Figure 5, *X* may be calculated by:

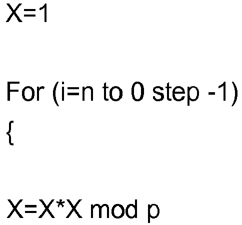

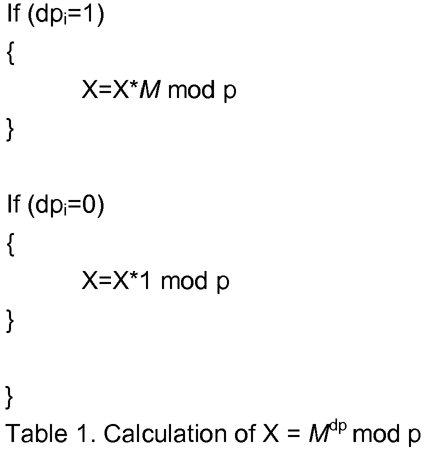

Similarly, if *p - 1* is represented as *p - 1* = [*pm_{n-1,}pmₙ₋₂ ,....,pm₂,pm₁,pm₀*], *Y* may be calculated by:

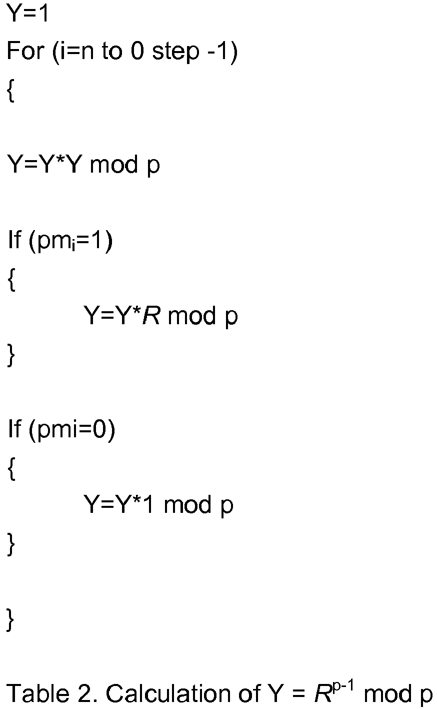

One way to calculate *Sp* from the above two procedures would be by simply combining the two calculations as follows:

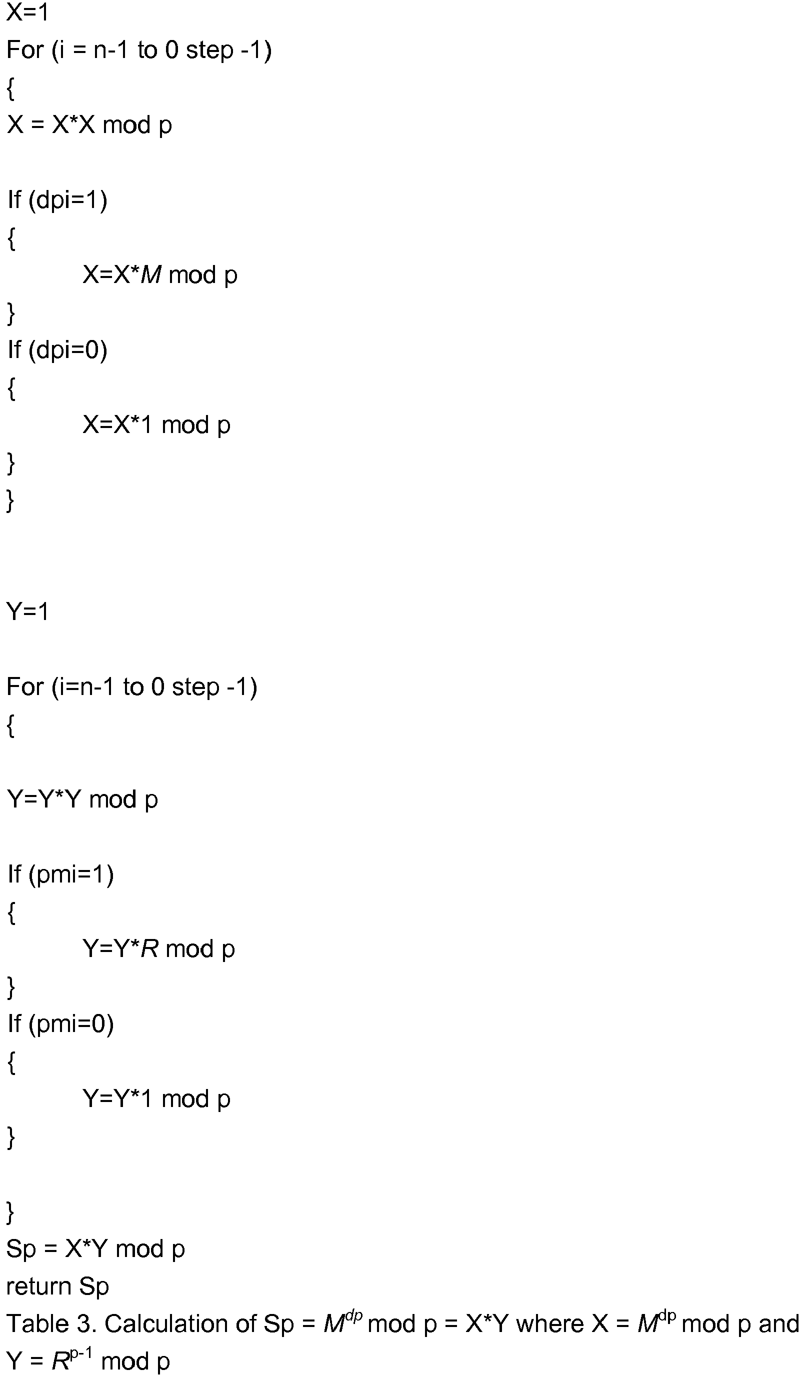

However, performing the calculation in that manner, while mathematically correct, provides little improvement over the traditional method for calculating *M^{dp}* mod *p* in that it involves the expense of two exponentiations and provides no additional protection because the calculation of *X* is the same as *Sp*. To benefit from the combination of the calculation of *X* and *Y*, according to a preferred embodiment, described herein below, these two calculations are intertwined in a manner which requires only one exponentiation without actually computing either *X* or *Y* yet resulting in the calculation of the value *X***Y* mod *p*.

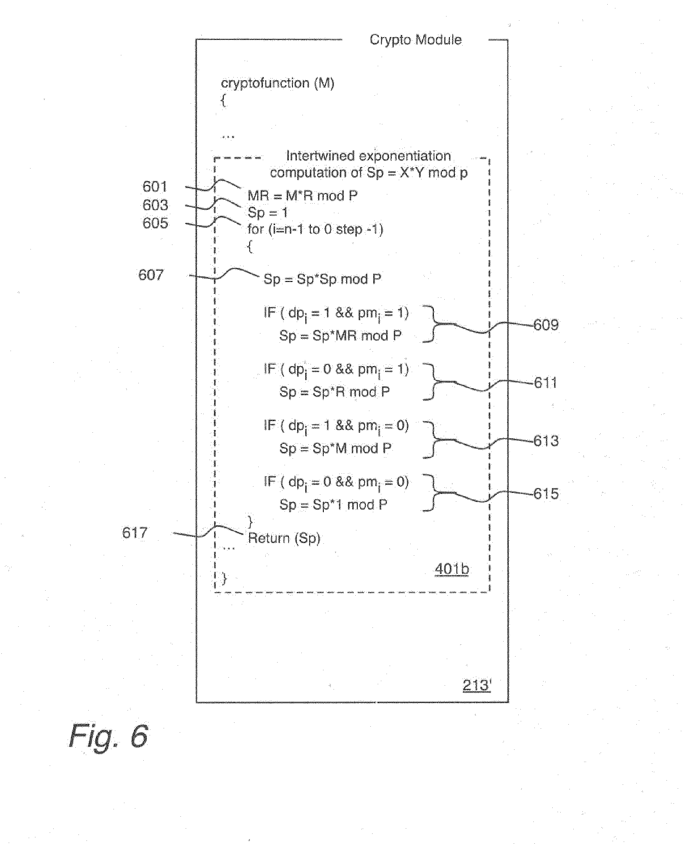

Figure 6 is a program listing illustrating a modified modular exponentiation calculation 401 b used in a preferred embodiment of a crypto module 213' incorporated, for example, into a memory, e.g., the ROM 204 or NVM 205 of a portable security device 109 to calculate *Sp* (and *Sq* with modifications). The exponentiation calculation 401 b calculates *Sp* by interleaving a calculation of *M^{dp}* mod *p* and a calculation of *R^{p-1}* mod *p*. The resulting value *Sp* is, in effect, *Sp = (M^{dp}* mod *p*)*(*R^{p-1}* mod *p*). As *R^{p-1}* mod *p* = 1, the result is equivalent to *Sp* = *M^{dp}* mod *p*. However, the calculations of *(M^{dp}* mod *p*) and (*R^{p-1}* mod *p*) are performed simultaneously and the intermediate results of the two exponentiations are intermingled in the intermediate results of each iteration thus masking the calculation of *Sp* = *M^{dp}* mod *p* with the random *R* in a highly efficient and difficult-to-detect manner.

First, a value *M*R is computed from *M*R* mod *p*, Step 601.

Next, with the binary representation of *dp* as *dp =* [*dpₙ₋₁, dpₙ₋₂ ,....,dp₂,dp₁ ,dp₀*] and of *p - 1 as p -* 1 *=* [*pmₙ₋₁,pmₙ₋₂ ,....,pm₂, pm₁, pm₀*], *Sp* is computed by first initializing the variable Sp used to accumulate the eventual result to 1, step 603, and iteratively (loop 605) modifying Sp over the bits of *dp* and *pm* and depending on the value of each bit *dpᵢ* and *pmᵢ* performing updates the value Sp in a manner that corresponds to the calculation in Table 3 above but that intertwines the two calculations.

At the beginning of each iteration, Sp is set to Sp = Sp*Sp mod p, step 607.

The value pair *dpᵢ* and *pmᵢ* present four possible mutually exclusive alternatives: *dpᵢ =* 1 and *pmᵢ = 1, dpᵢ =* 0 and *pmᵢ = 1, dpᵢ =* 1 and *pmᵢ* = 0, and *dpᵢ =* 0 and *pmᵢ =* 0.

For the first of these alternatives (*dpᵢ =* 1 and *pmᵢ =* 1), Sp is set to Sp = Sp**MR* mod p, steps 609.

For the second alternative (*dpᵢ =* 0 and *pmᵢ =* 1), Sp is set to Sp = Sp**R* mod p, steps 611.

For the third alternative (*dpᵢ* = 1 and *pmᵢ* = 0), Sp is set to Sp = Sp*M mod p, steps 613.

For the fourth alternative (*dpᵢ* = 0 and *pmᵢ* = 0), Sp is set to Sp = Sp*1 mod p, steps 615.

At the conclusion, after all bits of *dpᵢ* and *pmᵢ* have been processed by the loop 605, the result held in Sp is *Sp* = *M^{dp}* mod *p* which may be returned to the calling routine, Step 617.

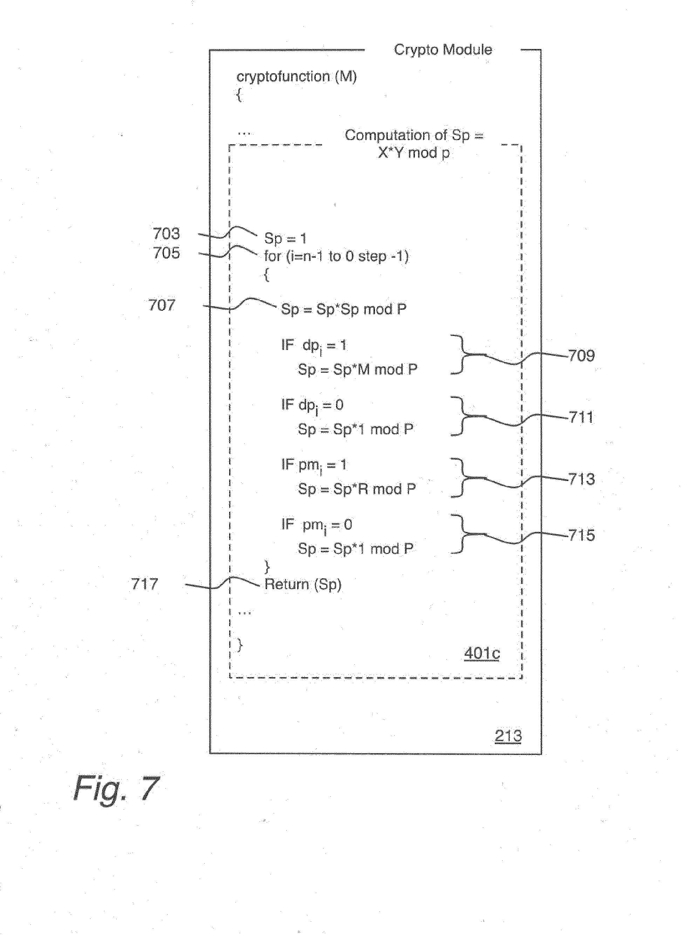

Figure 7 is a program listing illustrating an intermediary between the program listing of Table 3 and the program listing of Figure 6 which facilitates understanding that the program of Figure 6 produces the same result, namely, *Sp* = *M^{dp}* mod *p*, as the program of Table 3.

As in the program listing of Figure 6, the program of Figure 7 also initializes the value of variable Sp to 1, step 703, and loops over all bits in *dp* and *pm,* loop 705. In this program listing, the values of the bits *dpᵢ* and *pmᵢ* are checked independently.

Consider first, the case of *dp*. Program steps 707, 709, and 711 correspond to the computation of *M^{dp}* mod *p* performed in Table 1 and in the upper half of the program of Table 3. Similarly, program steps 707, 713, and 715 correspond to the computation of *R^{p-1}* mod *p* performed in Table 2 and the lower half of the program of Table 4.

Now consider that for the case of dpi = 1 and pmi = 1 the program of Figure 7 performs steps 709 and 713:
Sp = Sp*M mod p (709)
Sp = Sp*R mod p (713)
These two statements may be combined into
Sp = Sp*M*R mod p
which is the same as statement 609 of Figure 6.

Similarly, in the case of dpi = 0 and pmi = 1, the program of Figure 7 performs steps 711 and 713:
Sp=Sp*1 mod p (711)
Sp = Sp*R mod p (713)
These two statements may be combined into
Sp = Sp*R mod p
which is equivalent to statement 611 of Figure 6.

In the case of dpi = 1 and pmi = 0, the program of Figure 7 performs steps 709 and 715:
Sp = Sp*M mod p (709)
Sp=Sp*1 mod p (715)
These two statements may be combined into
Sp = Sp*M mod p
which is equivalent to statement 613 of Figure 6.

Finally in the case of dpi = 0 and pmi = 0, the program of Figure 7 performs steps 711 and 715:
Sp=Sp*1 mod p (711)
Sp=Sp*1 mod p (715)
These two statements may be combined into
Sp = Sp*1 mod p
which is the same as statement 615 of Figure 6.

Thus, the foregoing explanation illustrates that the program listing 401 c of Figure 7 produces the same result as the program listing of Table 3 which combines the traditional square-and-multiply-always algorithm for computing an exponent modulo p with a calculation of *R^{p-1}* mod *p*. The explanation further clarifies that the program listing 401 c is equivalent to the program listing 401 b of Figure 6.

A notable difference between the program listing 401 b of Figure 6 and the program listing 401 c of Figure 7 is that for program listing 401 b of Figure 6 the four factors *MR*, *R*, *M*, and *1* - most notably *MR* - in the calculations 609, 611, 613, and 615, respectively, are precomputed.

The mechanism from protecting a cryptographic device by multiplicative masking as set forth herein has many advantages:
- Works on the same processor as the non-masked mechanism because the length of the modulo operand is not increased
- The random value used in the masking can be of any size without incurring a computational penalty
- The modulo operand is not masked, thereby avoiding a time penalty in some prior art mechanisms for masking the exponentiation calculation
- The masked calculation has essentially the same computation time as the unmasked calculation
- The mechanism is compatible with most if not all exponentiation mechanisms and security mechanisms

From the foregoing it is evident that a mechanism is presented herein that masks the exponentiation calculation of *M^{dp}* mod *p* performed by a cryptographic apparatus in a highly efficient manner thereby protecting detection of *dp* through side-channel attacks.

The above-described mechanism has been described in the context of the square-and-multiply-always technique. The mechanism is readily adapted to other exponentiation techniques.

Although specific embodiments of the invention have been described and illustrated, the invention is not to be limited to the specific forms or arrangements of parts so described and illustrated. The invention is limited only by the claims.

## Claims

1. A method for operating a cryptography apparatus to perform a decryption operation having an exponentiation operation X, the method protecting the apparatus from revealing information in regard to the exponentiation operation X to a side-channel attack, the method comprising producing a result equivalent to the exponentiation by:
receiving a message C on which to perform a cryptographic operation including the exponentiation operation X;
operating the cryptographic apparatus to mask the modular exponentiation operation X by performing a multiplicative masking of the modular exponentiation by computing a product X*Y wherein Y is a function having a final result with the value one;
returning the value S = X*Y; and
completing the cryptographic operation using the value S obtained from the operation.

2. The method of Claim 1 comprising the step of computing the product *X***Y* iteratively over a plurality of bits in an argument *x* for the function *X* = *f(x)* and over a plurality of bits in an argument *y* for the function *Y* = *f(y)* and wherein in each iteration *i* an intermediate result is accumulated in the value *S* wherein the intermediate result is a function of both the value of the bit of *x* corresponding to the iteration *i and* the bit of *y* corresponding to the iteration *i*.

3. The method of Claim 1 or Claim 2 wherein the modular exponentiation operation *X* is *M^{dp}* mod *p* and the operation Y is *R^{p-1}* mod *p* wherein *p* is prime, and *R* and *p* are coprime thereby ensuring that the value of *R^{p-1}* mod *p* is one.

4. The method of Claim 3 wherein the value *S* is computed by the cryptographic apparatus by
operating the cryptography apparatus to compute *MR* = *M***R* mod p and initializing the value S to 1;
operating the cryptography apparatus to:
iterate over all bits *i* of *dp* and *pm1* (where *pm1* = *p - 1*):
set *S* = *S* * *S* mod *p*; and
if *dpᵢ* = 1 and *pmiᵢ* = 1 then set *S* = *S***MR* mod *p*
if *dpᵢ* = 0 and *pmiᵢ* = 1 then set *S* = *S***R* mod *p*
if *dpᵢ* = 1 and *pmiᵢ* = 0 then set *S* = *S***M* mod *p*
if *dpᵢ* = 0 and *pmiᵢ* = 0 then set *S* = *S**1 mod *p*.

5. The method of any of the preceding claims further comprising operating the cryptography apparatus to use the result *S* in decrypting the message *M* in an RSA decryption algorithm.

6. The method of any of the preceding claims wherein the cryptography apparatus is a smart card.

7. The method of any of the preceding claims wherein the cryptography apparatus is receives the message M from another computing apparatus.

8. The method of claim 7 wherein the another computing apparatus is a host computer to which the cryptography apparatus is connected to and for which the cryptography apparatus performs cryptographic operations.

9. A cryptography apparatus protected from side-channel attack and comprising a central processing unit, memory, and an instruction storage wherein the instruction storage contains instructions to cause the central processing unit to perform the method of any of the preceding claims.
